# EUROPÄISCHE PATENTSCHRIFT

(11) **EP 1 423 311 B1**
(45) Veröffentlichungstag und Bekanntmachung des Hinweises auf die Patenterteilung: **09.02.2005**
(21) Anmeldenummer: 02758481.2
(22) Anmeldetag: 23.08.2002
(51) Int. Cl.: B65D 43/02

(54) **RASTVORRICHTUNG UND MIT DIESER AUSGESTATTETE KÜCHENMASCHINE**
DETENT DEVICE AND FOOD PROCESSOR EQUIPPED THEREWITH
DISPOSITIF A ENCOCHE ET ROBOT MENAGER DOTE DE CE DISPOSITIF

(30) Priorität: 30.08.2001 DE 10142508
(43) Veröffentlichungstag der Anmeldung: 02.06.2004
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, 3333 Ljubno ob Savin (SI); AREH, Marko, 2360 Radlje ob Dravi (SI)
(86) Internationale Anmeldenummer: PCT/EP2002/009461
(87) Internationale Veröffentlichungsnummer: WO 2003/020605

(56) Entgegenhaltungen:
- GB-A- 486 367
- US-A- 4 034 889
- US-A- 5 577 779
- US-A- 5 609 758
- PATENT ABSTRACTS OF JAPAN vol. 015, no. 396 (M-1166), 8. Oktober 1991 (1991-10-08) & JP 03 162252 A (SEKISUI CHEM CO LTD), 12. Juli 1991 (1991-07-12)

## Beschreibung

Die Erfindung betrifft eine Rastvorrichtung zum Befestigen eines ersten Körpers, der in einen zweiten Körper hineinsteckbar ist.

Um zwei Körper miteinander zu verbinden, bestehen viele Möglichkeiten. Neben Schraubverbindungen bieten Rastverbindungen den Vorteil, dass die Verbindungen sich wieder einfach lösen lassen, wenn die beiden Körper, beispielsweise zu Reparaturzwecken voneinander gelöst werden sollen.

Es ist die Aufgabe der Erfindung, eine einfache aufgebaute Rastvorrichtung zu schaffen.

Bei einer Rastvorrichtung der eingangs genannten Art wird diese Aufgabe dadurch gelöst, dass sich eine erste Wand des ersten Körpers im wesentlichen im rechten Winkel zu einer zweiten Wand des zweiten Körpers erstreckt, und mit einem Rastvorsprung ausgestattet ist, der auf einer von dem zweiten Körper umschlossenen Innenseite der ersten Wand angeordnet ist und der durch eine von einem mit dem ersten Körper verbundenen Verbindungsmittel ausgeübte Kraft in eine Rastöffnung hineindrückbar ist.

Durch die erfindungsgemäße Ausführung der Rastvorrichtung gelingt es, axiale Kräfte von dem ersten Körper auf den zweiten Körper aufzubringen. Dadurch wird eine gute und stabile Verbindung in axialer Richtung zwischen den beiden Körpern geschaffen.

Vorteilhafte Weiterbildungen ergeben sich aus den Unteransprüchen und aus der Beschreibung.

In einer besonders vorteilhaften Ausbildung der Erfindung ist der Rastvorsprung auf einer mit der ersten Wand verbundenen Feder angeordnet. Dieser Rastvorsprung wird dann durch das Verbindungsmittel, wenn dieses in die erste Wand des ersten Körpers eingebracht ist, in eine zugeordnete Rastöffnung hineingedrückt oder hineingeschoben, wodurch eine sichere und dennoch leicht lösbare Verbindung zwischen dem ersten und dem zweiten Körper entsteht.

In einer besonders geeigneten Variante der Erfindung ist die Feder einteilig mit der ersten Wand verbunden. Die Feder lässt sich somit in einem Arbeitsgang zusammen mit der ersten Wand herstellen. Die Feder und die Wand bestehen entweder aus Kunststoff oder aus Metall. Wenn die Feder und die Wand aus Kunststoff bestehen, lassen sie sich als einteiliges Spritzgussteil fertigen.

Besonders geeignet ist eine Rastvorrichtung, bei der die Feder unter einem spitzen Winkel gegenüber der zweiten Wand angeordnet ist. Durch das Einführen des Verbindungsmittels durch die erste Wand des ersten Körpers hindurch wird die Feder gespannt und gleichzeitig der and der Feder angebrachte Rastvorsprung in die Rastöffnung hineingedrückt.

Mit Vorteil greift der Rastvorsprung in eine Sacklochbohrung ausgebildete Rastöffnung ein.

Es erweist sich als vorteilhaft, wenn das Verbindungsmittel eine Schraube, ein Stift oder ein Bolzen ausgebildet ist. Durch diese Verbindungsmittel lässt sich eine schnelle Verbindung zwischen dem ersten und dem zweiten Körper erzielen.

Eine besondere Stabilität erreicht die Rastvorrichtung, wenn der erste Körper eine auf der Innenseite der ersten Wand stehende, im wesentlichen senkrecht zu der ersten Wand verlaufende Stützwand aufweist und wenn das Verbindungsmittel zwischen der Stützwand und der Feder in den ersten Körper hineingeschraubt bzw. hineingesteckt wird.

Die Erfindung bezieht sich ebenfalls auf ein Küchengerät, das mit einer Rastvorrichtung nach einem der Ansprüche 1 bis 6 ausgestattet ist. Dadurch lassen sich die oben genannten Vorteile bei dem derart mit dem ersten und dem zweiten Körper ausgestatteten Küchengerät ausnutzen. Dieser Aufbau trägt dazu, ein Küchengerät schnell zu fertigen und es im Falle einer Reparatur wieder leicht auseinander nehmen zu können.

Die Erfindung eignet sich besonders für ein Küchengerät, bei dem der erste Körper ein Bodenteil ist, die erste Wand eine Bodenplatte ist, der zweite Körper ein Mantelteil ist und die zweite Wand eine Mantelwand ist.

Insbesondere ist die Erfindung geeignet für ein Küchengerät mit einer kreisrunden Bodenplatte, die die Stirnseite eines im wesentlichen zylindrischen, kegel- oder kegelstumpfförmigen Aufbaus eines Küchengeräts, insbesondere einer Küchenmaschine wie einer Zitruspresse, darstellt.

Durch den Einsatz der erfindungsgemäßen Rastvorrichtung wird das Gehäuse der Küchenmaschine auf eine Weise gestaltet. Der Raum im Innnem des Gehäuses der Küchenmaschine lässt sich rationell ausnutzen, da die Befestigung zwischen der stirnseitigen Bodenplatte und der Mantelwand nur wenig Raum einnimmt. Durch die Form der Montage entstehen weder innen noch außen störende Kanten.

Nachstehend wird die Erfindung in einem Ausführungsbeispiel anhand der Figuren näher erläutert. Es zeigen:
- Fig. 1:: die Rastvorrichtung ohne ein Verbindungsmittel im Querschnitt,
- Fig. 2:: die Rastvorrichtung gemäß Fig. 1 zusammen mit dem Verbindungsmittel,
- Fig. 3: eine Draufsicht auf das Verbindungsmittel gemäß einer Linie II -II, teilweise geschnitten, und
- Fig. 4: eine perspektivische Ansicht einer Bodenplatte eines Küchengeräts.

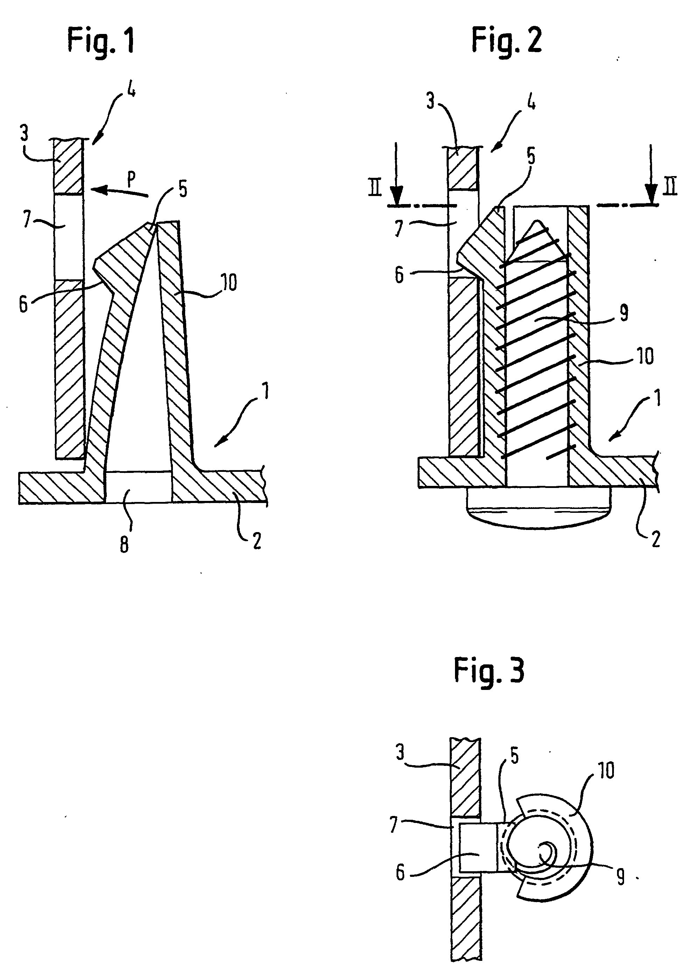

Ein Körper 1 (Fig. 1) weist eine Wand 2 auf. Der Körper 1 lässt sich von unten in eine mantel- oder ringförmig ausgebildete Wand 3 eines Körpers 4 hineinschieben.

An der Wand 2 ist eine Feder 5 derart angeformt, dass sie in einen von der Wand 2 und der Wand 3 zusammen mit anderen (hier nicht dargestellten) Bauelementen gebildeten Innenraum hineinragt. Die Feder 5 bildet mit der Wand 3 einen spitzen Winkel aus. Sie weist an ihrem vorderen Ende einen Rastvorsprung 6 auf, der einer Rastöffnung 7 zugewandt ist, die in die Wand 3 eingebracht ist. Die Rastöffnung 7 ist entweder eine durch die Wand 3 hindurchgehende Öffnung oder eine Sacklochbohrung.

In einem anderen, hier nicht dargestellten Ausführungsbeispiel ist die Form der Rastöffnung an die Form des Rastvorsprungs 6 besonders angepasst. Jedoch ist es völlig ausreichend, wenn, wie in Fig. 1 und 2 dargestellt, der Rastvorsprung 6 vollständig von der Rastöffnung 7 aufgenommen wird.

Die Wand 2 ist mit einer Öffnung 8 ausgestattet, durch die ein Verbindungsmittel hindurchführbar ist. Beispielsweise eignet sich eine Schraube 9, deren Schraubwindung in korrespondierende, vorgeformte Nuten auf der von der Wand 3 abgewandten Seite der Feder 5 eingreift.

Um eine gute Halterung der Schraube 9 oder eines anderen an ihrer Statt eingesetzten Verbindungsmittels in der Wand 2 zu bewirken und um zu erreichen, dass die Feder 5 unter Hineinschieben des Verbindungsmittels, insbesondere unter Hineindrehen der Schraube 9, mit ihrem Rastvorsprung 6 besonders sicher in die Rastöffnung 7 hineingedrückt wird, ist vorzugsweise eine Stützwand 10 vorgesehen, die die Schraube 9 oder einen in durch die Öffnung 8 hindurchgeführten Stift in ihrer Position hält und verhindert, dass die rücktreibende Kraft der Feder 5 die Schraube 9 bzw. den Stift entgegen der Richtung eines Pfeils P von der Wand 3 weggebogen wird.

Die Stützwand 10 hat beispielsweise einen kreissegmentförmigen Querschnitt. Dadurch ist eine ausreichende Halterung der Schraube gewährleistet. Bevorzugt ist auch die Stützwand 10 einteilig mit der Wand 2 verbunden.

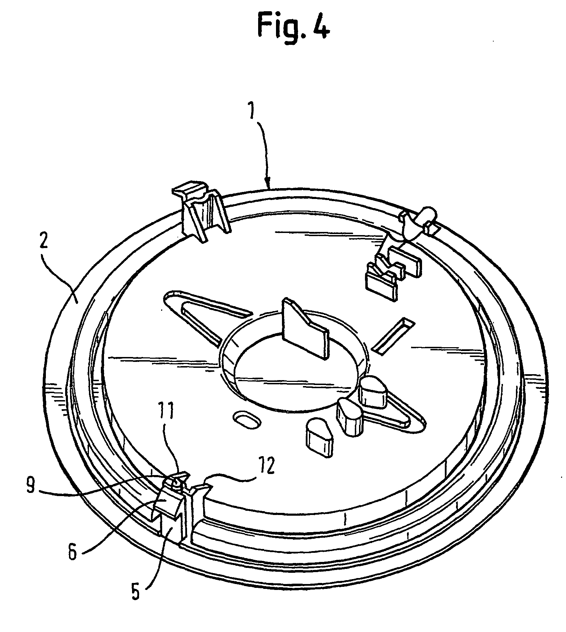

In einer Ausführungsform der Erfindung bildet die Wand 2 (Fig. 4) des Körpers 1 eine Bodenplatte aus. Die Schraube 9 wird anstelle der Stützwand 10 durch zwei von einander getrennte Stützwände 11 und 12 abgestützt.

Durch die Erfindung wird eine einfache und gut haltbare Verbindung zwischen einem ersten 1 und einem zweiten Körper 4 geschaffen, die beispielsweise Teile eines Küchengeräts sind, wobei die erste Wand 2 den Boden bildet und die zweite Wand 3 eine Mantelwand ist. Die erste Wand 2 des ersten Körpers 1 erstreckt sich im wesentlichen im rechten Winkel zu der zweiten Wand 3 des zweiten Körpers 4. Ein Rastvorsprung 6, der auf einer von dem zweiten Körper 4 umschlossenen Innenseite der ersten Wand 2 angeordnet ist, wird durch die von einem mit dem ersten Körper 1 verbundenen Verbindungsmittel, insbesondere eine Schraube 9, ausgeübte Kraft in eine Rastöffnung 7 in der Wand 3 hineingedrückt.

## Patentansprüche

1. Rastvorrichtung zum Befestigen eines ersten Körpers (1), der in einen zweiten Körper (4) hineinsteckbar ist, wobei eine erste Wand (2) des ersten Körpers (1) sich im wesentlichen im rechten Winkel zu einer zweiten Wand (3) des zweiten Körpers (4) erstreckt, mit einem Rastvorsprung (6), der auf der ersten Wand (2) angeordnet ist und der durch eine Kraft in eine Rastöffnung (7) der zweiten Wand (3) hineindrückbar ist, **dadurch gekennzeichnet, dass** der Rastvorsprung (6) auf einer von dem zweiten Körper (4) umschlossenen Innenseite der ersten Wand (2) angeordnet ist und zum Ausüben der Kraft ein in den ersten Körper (1) eingebrachtes Verbindungsmittel (9) vorgesehen ist.

2. Rastvorrichtung nach Anspruch 1, dass der Rastvorsprung (6) auf einer mit der ersten Wand (2) verbundenen Feder (5) angeordnet ist.

3. Rastvorrichtung nach Anspruch 2, **dadurch gekennzeichnet, dass** die Feder (5) unter einem spitzen Winkel gegenüber der zweiten Wand (3) angeordnet ist.

4. Rastvorrichtung nach Anspruch 2 oder 3, **dadurch gekennzeichnet, dass** die Feder (5) einteilig mit der ersten Wand (2) verbunden ist.

5. Rastvorrichtung nach einem der Ansprüche 1 bis 4, **dadurch gekennzeichnet, dass** die Rastöffnung (7) eine Sacklochbohrung ist.

6. Rastvorrichtung nach einem der Ansprüche 1 bis 5, **dadurch gekennzeichnet, dass** das Verbindungsmittel eine Schraube (9), ein Stift oder ein Bolzen ist.

7. Rastvorrichtung nach einem der Ansprüche 1 bis 6, **dadurch gekennzeichnet, dass** der erste Körper (1) eine auf der Innenseite der ersten Wand (2) stehende, im wesentlichen senkrecht zu der ersten Wand (2) verlaufende Stützwand aufweist und dass das Verbindungsmittel zwischen der Stützwand und der Feder (5) in den ersten Körper (1) hineinschraubbar bzw. hineinsteckbar ist.

8. Küchengerät mit einer Rastvorrichtung nach einem der Ansprüche 1 bis 7, **dadurch gekennzeichnet, dass** der erste (1) und der zweite Körper (4) Gehäuseteile des Küchengeräts umfassen.

9. Küchengerät nach Anspruch 8, **dadurch gekennzeichnet, dass** der erste Körper (1) ein Bodenteil ist, dass die erste Wand (2) eine Bodenplatte ist, dass der zweite Körper (4) ein Mantelteil ist und dass die zweite Wand (3) eine Mantelwand ist.

## Claims

1. Detent device for fastening a first body (1), which can be plugged into a second body (4), wherein a first wall (2) of the first body (1) extends substantially at a right angle to a second wall (3) of the second body (4), with a detent projection (6) arranged on the first wall (2) and able to be pressed by a force into a detent opening (7) of the second wall (3), **characterised in that** the detent projection (6) is arranged on an inner side, which is enclosed by the second body (4), of the first wall (2) and a connecting means (9) mounted in the first body (1) is provided for exerting the force.

2. Detent device according to claim 1, **characterised in that** the detent projection (6) is arranged on a spring (5) connected with the first wall (2).

3. Detent device according to claim 2, **characterised in that** the spring (5) is arranged at an acute angle relative to the second wall (3).

4. Detent device according to claim 2 or 3, **characterised in that** the spring (5) is integrally connected with the first wall (2).

5. Detent device according to one of claims 1 to 4, **characterised in that** the detent opening (7) is a blind bore.

6. Detent device according to one of claims 1 to 5, **characterised in that** the connecting means is a screw (9), a pin or a bolt.

7. Detent device according to one of claims 1 to 6, **characterised in that** the first body (1) has a support wall standing on the inner side of the first wall (2) and extending substantially perpendicularly to the first wall (2) and that the connecting means can be screwed or plugged into the first body (1) between the support wall and the spring (5).

8. Kitchen appliance with a detent device according to one of claims 1 to 7, **characterised in that** the first body (1) and the second body (4) comprise housing parts of the kitchen appliance.

9. Kitchen appliance according to claim 8, **characterised in that** the first body (1) is a base part, that the first wall (2) is a base plate, that the second body (4) is a casing part and that the second wall (3) is a casing wall.

## Revendications

1. Dispositif à encoche pour fixer un premier corps (1), qui peut être emboîté dans un second corps (4), une première paroi (2) du premier corps (1) s'étendant sensiblement à angle droit par rapport à une seconde paroi (3) du second corps (4), avec une saillie crantée (6), qui est disposée sur la première paroi (2) et qui peut être enfoncée par une force dans une ouverture crantée (7) de la seconde paroi (3), **caractérisé en ce que** la saillie crantée (6) est disposée sur un côté intérieur, entouré par le second corps (4), de la première paroi (2) et un moyen de liaison (9) introduit dans le premier corps (1) est prévu pour l'exercice de la force.

2. Dispositif à encoche selon la revendication 1, **caractérisé en ce que** la saillie crantée (6) est disposée sur un ressort (5) relié à la première paroi (2).

3. Dispositif à encoche selon la revendication 2, **caractérisé en ce que** le ressort (5) est disposé en formant un angle aigu par rapport à la seconde paroi (3).

4. Dispositif à encoche selon la revendication 2 ou 3, **caractérisé en ce que** le ressort (5) est relié d'une seule pièce à la première paroi (2).

5. Dispositif à encoche selon l'une quelconque des revendications 1 à 4, **caractérisé en ce que** l'ouverture crantée (7) est un alésage à trou borgne.

6. Dispositif à encoche selon l'une quelconque des revendications 1 à 5, **caractérisé en ce que** le moyen de liaison est une vis (9), une cheville ou un boulon.

7. Dispositif à encoche selon l'une quelconque des revendications 1 à 6, **caractérisé en ce que** le premier corps (1) présente une paroi d'appui debout sur le côté intérieur de la première paroi (2), agencée sensiblement perpendiculairement à la première paroi (2) et **en ce que** le moyen de liaison peut être vissé resp. emboîté dans le premier corps (1) entre la paroi d'appui et le ressort (5).

8. Appareil électroménager avec un dispositif à encoche selon l'une quelconque des revendications 1 à 7, **caractérisé en ce que** le premier (1) et le second corps (4) comprennent des parties de boîtier de l'appareil électroménager.

9. Appareil électroménager selon la revendication 8, **caractérisé en ce que** le premier corps (1) est une plaque de fond, **en ce que** la première paroi (2) est une plaque de fond, **en ce que** le second corps (4) est une partie d'enveloppe et **en ce que** la seconde paroi (3) est une paroi d'enveloppe.
